# EUROPEAN PATENT SPECIFICATION

(11) **EP 4 302 237 B1**
(45) Date of publication and mention of the grant of the patent: **02.07.2025**
(21) Application number: 22733895.1
(22) Date of filing: 27.05.2022
(51) Int. Cl.: G06N 3/04, G06N 3/08

(54) **GENERATING NEURAL NETWORK OUTPUTS BY CROSS ATTENTION OF QUERY EMBEDDINGS OVER A SET OF LATENT EMBEDDINGS**
ERZEUGUNG VON NEURONALEN NETZWERKAUSGÄNGEN DURCH QUERAUFMERKSAMKEIT VON ABFRAGEEINBETTUNGEN ÜBER EINEN SATZ LATENTER EINBETTUNGEN
GÉNÉRATION DE SORTIES DE RÉSEAU NEURONAL PAR L'ATTENTION CROISÉE DE CODAGES DE REQUÊTE SUR UN ENSEMBLE D'INCORPORATIONS LATENTES

(30) Priority: 28.05.2021 US 202163194874 P
(43) Date of publication of application: 10.01.2024
(73) Proprietor: DeepMind Technologies Limited, London EC4A 3TW (GB)
(72) Inventor: JAEGLE, Andrew Coulter, London N1C 4AG (GB); ALAYRAC, Jean-Baptiste, London N1C 4AG (GB); BORGEAUD DIT AVOCAT, Sebastian, London N1C 4AG (GB); IONESCU, Catalin-Dumitru, London N1C 4AG (GB); DOERSCH, Carl, London N1C 4AG (GB); DING, Fengning, London N1C 4AG (GB); VINYALS, Oriol, London N1C 4AG (GB); HÉNAFF, Olivier Jean, London N1C 4AG (GB); KOPPULA, Skanda Kumar, London N1C 4AG (GB); ZORAN, Daniel, London N1C 4AG (GB); BROCK, Andrew, London N1C 4AG (GB); SHELHAMER, Evan Gerard, London N1C 4AG (GB); ZISSERMAN, Andrew, London N1C 4AG (GB); CARREIRA, Joao, London N1C 4AG (GB)
(74) Representative: Marks & Clerk GST
(86) International application number: PCT/EP2022/064501
(87) International publication number: WO 2022/248727

(56) References cited:
- WO-A1-2021/058266
- CARION NICOLAS ET AL: "End-to-End Object Detection with Transformers", ARXIV.ORG, 28 May 2020 (2020-05-28), 201 Olin Library Cornell University Ithaca, NY 14853, pages 1 - 26, XP055810471, Retrieved from the Internet <URL:https://arxiv.org/pdf/2005.12872.pdf> DOI: 10.1007/978-3-030-58452-8_13
- MATTHEW TANCIK ET AL: "Fourier Features Let Networks Learn High Frequency Functions in Low Dimensional Domains", ARXIV.ORG, CORNELL UNIVERSITY LIBRARY, 201 OLIN LIBRARY CORNELL UNIVERSITY ITHACA, NY 14853, 18 June 2020 (2020-06-18), XP081698769

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

Carion et al., "End-to-End Object Detection with Transformers", 28 May 2020, arXiv:2005.12872v3 describes DEtection Transformer (DETR). DETR flattens a 2D representation of an image and supplements it with a positional encoding before passing it into a standard transformer encoder. A transformer decoder attends to the encoder output and processes a small fixed number of object queries to obtain output embeddings that are used to predict an object class and bounding box.

### SUMMARY

This specification generally describes a system implemented as computer programs on one or more computers in one or more locations that uses a neural network to process a network input and generate a network output.

The invention is set out in claim 1; further aspects are defined in the dependent claims.

In one aspect there is described a method performed by one or more data processing apparatus. The method comprises obtaining: (i) a network input to a neural network, and (ii) a set of query embeddings that collectively define a prediction task to be performed by the neural network by processing the network input. The method processes the network input using the neural network to generate a network output that comprises a respective dimension corresponding to each query embedding in the set of query embeddings. The method processes the network input using an encoder block of the neural network to generate a representation of the network input as a set of latent embeddings. The method processes (i) the set of latent embeddings, and (ii) the set of query embeddings, using a cross-attention block that generates each dimension of the network output by cross-attention of a corresponding query embedding over the set of latent embeddings.

Throughout this specification, an embedding refers to an ordered collection of numerical values, e.g., a vector or matrix of numerical values.

Further, throughout this specification, a neural network "block" refers to a group of one or more neural network layers in a neural network.

According to one aspect, there is provided a method performed by one or more data processing apparatus, the method comprising: obtaining: (i) a network input to a neural network, and (ii) a set of query embeddings that collectively define a prediction task to be performed by the neural network by processing the network input; processing the network input using the neural network to generate a network output that comprises a respective dimension corresponding to each query embedding in the set of query embeddings, comprising: processing the network input using an encoder block of the neural network to generate a representation of the network input as a set of latent embeddings; and processing: (i) the set of latent embeddings, and (ii) the set of query embeddings, using a cross-attention block that generates each dimension of the network output by cross-attention of a corresponding query embedding over the set of latent embeddings.

In some implementations, for each of one or more of the query embeddings: the query embedding defines a respective spatial position in the network input; and the dimension of the network output that corresponds to the query embedding defines a respective prediction relevant to the spatial position in the network input.

In some implementations, for each of one or more of the query embeddings: the query embedding comprises one or more input features from a respective spatial position in the network input; and the dimension of the network output that corresponds to the query embedding defines a respective prediction relevant to the spatial position in the network input.

In some implementations, for each of one or more query embeddings: the query embedding defines a modality of the network input.

In some implementations, the set of query embeddings collectively define a plurality of prediction tasks, and wherein for each of one or more of the query embeddings: the query embedding specifies a respective prediction task from the plurality of prediction tasks; and the dimension of the network output that corresponds to the query embedding defines a prediction output for the prediction task specified by the query embedding.

In some implementations, the plurality of prediction tasks comprise one or more of: a classification task, a regression task, a segmentation task, or an auto-encoding task.

In some implementations, generating a dimension of the network output by cross-attention of a corresponding query embedding over the set of latent embeddings comprises: generating a respective attention weight for each latent embedding based on: (i) the query embedding, and (ii) the latent embedding; and generating the dimension of the network output corresponding to the query embedding based on the attention weights for the latent embeddings.

In some implementations, generating the dimension of the network output corresponding to the query embedding based on the attention weights for the latent embeddings comprises: processing each latent embedding to generate a value embedding of the latent embedding; combining the value embeddings using the attention weights; and generating the dimension of the network output corresponding to the query embedding based at least in part on a result of combining the value embeddings using the attention weights.

In some implementations, the cross-attention is query-key-value attention.

In some implementations, a number of query embeddings in the set of query embeddings is larger than a number of latent embeddings in the set of latent embeddings.

In some implementations, the number of query embeddings in the set of query embedding is larger than the number of latent embeddings in the set of latent embeddings by a factor of at least 2.

In some implementations, a number of latent embeddings in the set of latent embeddings is predefined, and a number of query embeddings in the set of query embeddings is variable and independent of the number of latent embeddings in the set of latent embeddings.

In some implementations, the network input comprises multi-modal data.

In some implementations, the method further comprises initializing the set of latent embeddings, wherein the network input comprises a set of data element embeddings, wherein the encoder block of the neural network comprises one or more cross-attention blocks that each perform operations comprising: updating each latent embedding in the set of latent embeddings using attention over some or all of the data element embeddings in the set of data element embeddings; wherein the encoder block of the neural network comprises one or more one or more self-attention blocks that each perform operations comprising: updating each latent embedding in the set of latent embeddings using attention over the set of latent embeddings.

In some implementations, a number of latent embeddings in the set of latent embeddings is less than a number of data element embeddings in the set of data element embeddings.

In some implementations, each data element embedding corresponds to a respective spatial position in the network input and comprises a feature embedding based on features of the network input at the spatial position.

In some implementations, each data element embedding corresponds to a respective spatial position in the network input and comprises a positional embedding that characterizes the spatial position.

In some implementations, each data element embedding comprises a modality embedding that defines a modality corresponding to the data element embedding.

According to another aspect there is provided a system comprising: one or more computers; and one or more storage devices communicatively coupled to the one or more computers, wherein the one or more storage devices store instructions that, when executed by the one or more computers, cause the one or more computers to perform the operations of the methods described herein.

According to another aspect there are provided one or more non-transitory computer storage media storing instructions that when executed by one or more computers cause the one or more computers to perform the operations of the methods described herein.

The subject matter described in this specification can be implemented in particular embodiments so as to realize one or more of the following advantages.

The neural network system described in this specification can process a network input to generate a representation of the network input as a set of latent embeddings, and then generate each dimension of a network output by cross-attention of a corresponding query embedding over the set of latent embeddings. Generating each dimension of the network output by cross-attention of a query embedding over the set of latent embeddings can enable the system to flexibly modify the dimensionality of the network output, e.g., by modifying the number of query embeddings, without restructuring the hidden layers of the neural network.

Moreover, the prediction task being performed by the neural network is defined by, and can be modified using, the query embeddings. Thus the neural network system provides a flexible and general purpose neural network architecture that can be implemented to perform a variety of prediction tasks for network inputs of various modalities with minimal modification. The neural network system can thereby enable more efficient use of resources by reducing or obviating the need to design, implement, and train a new neural network for each new domain or prediction task.

In contrast to conventional neural networks that generate a fixed-size output, e.g., a fixed-size image segmentation output, the neural network system described in this specification can use the query embeddings to generate sparse or partial network outputs. For example, rather than generating a full segmentation of an image, the neural network system can generate a segmentation for only a specified proper subset of an image, e.g., by querying the set of latent embeddings using only the pertinent query embeddings. Thus the neural network system can enable reduced consumption of computational resources (e.g., memory and computing power) by providing the option of generating sparse or partial network outputs when appropriate. For example, the neural network system can be used to segment only a region of interest of a larger image, while refraining from segmenting the remainder of the image.

More generally, the size of the network output can be defined irrespective of the size of the network input because the dimension of the network output corresponds to the number of query embeddings in the set of query embeddings. Further, the use of cross-attention avoids a quadratic dependence of the computations performed on the size of the network input and output; instead the dependence is linear, which facilitates processing e.g. video, audio, and multimodal data. Similarly, implementations of the described techniques use a set of latent embeddings that can be independent of a spatial or temporal structure of the network input and output, e.g. because the network output is generated by querying the latent embeddings using cross-attention. This facilitates processing multimodal data i.e. network inputs that have different structure or dimensionality. Further, some implementations of the system can perform tasks, e.g. an optical flow determination task, more effectively than some other techniques, and using a simpler architecture.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example neural network system that can generate a neural network output.
FIG. 2 is a block diagram of the example neural network system in more detail.
FIG. 3 is a flow diagram of an example process for using a neural network system to generate a neural network output.
FIG. 4 illustrates example query embeddings.
FIG. 5 illustrates another example of query embeddings.
FIG. 6 illustrates example modalities of inputs that can be processed by a neural network system.
FIG. 7A illustrates example multi-modal results.
FIG. 7B illustrates example multi-modal results.

Like reference numbers and designations in the various drawings indicate like elements.

### DETAILED DESCRIPTION

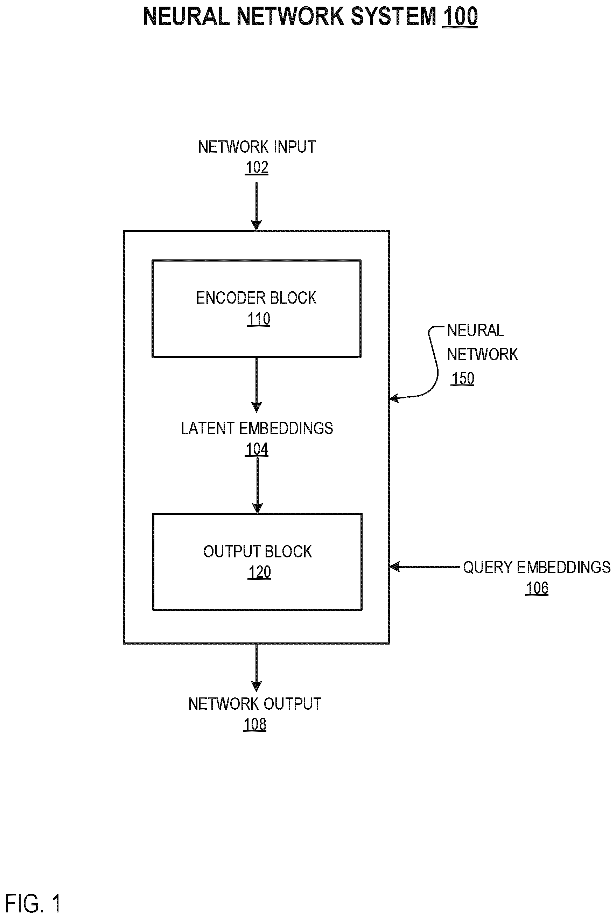

FIG. 1 is a block diagram of an example neural network system 100. The neural network system 100 is an example of a system implemented as computer programs on one or more computers in one or more locations in which the systems, components, and techniques described below are implemented.

The neural network system 100 can be configured to obtain a neural network input 102 and process the input 102 using a neural network 150 to generate the neural network output 108.

The network input 102 can include any appropriate type of data. That is, the neural network 150 can be configured to process inputs of any of multiple modalities, e.g., image, video, audio, text, or any other appropriate modality, or any combination thereof. The neural network 150 can have a single set of parameters while, at the same time, being substantially flexible such that it is able to process any one, or a combination, of the multiple modalities.

In some implementations, the network input 102 can characterize an entity. The entity can include an image, an audio waveform, a point cloud (e.g., generated by a lidar or radar sensor), a protein, a sequence of words (e.g., that form one or more sentences or paragraphs), a video (e.g., represented a sequence of video frames), or any other appropriate type of data or a combination thereof. As used herein an image, i.e. a static or moving image (video), may include a point cloud.

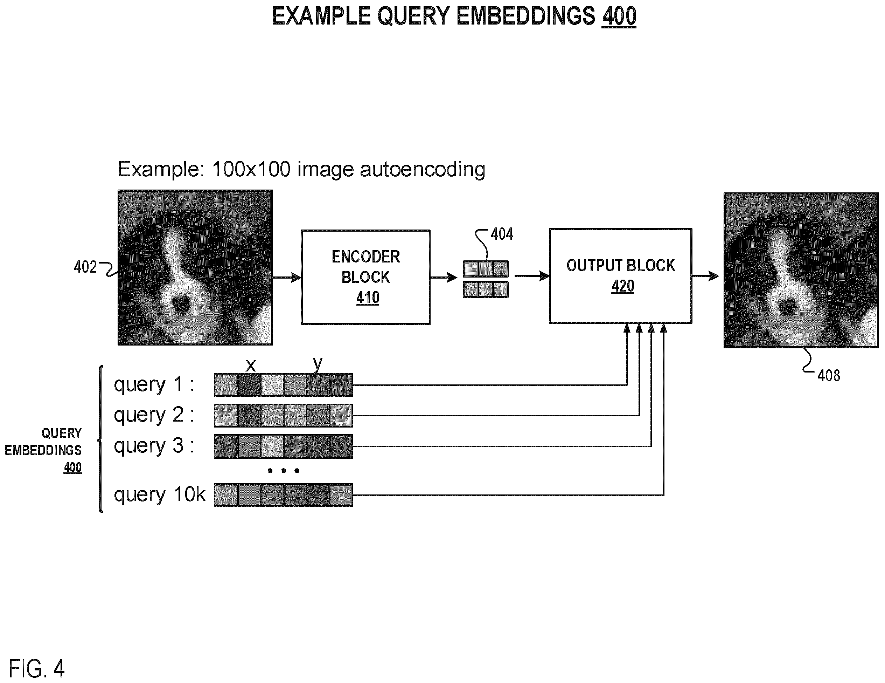

As a particular example, the entity can include multiple units arranged in a spatial or temporal structure, e.g., as illustrated in FIG. 4, the entity can be an image and each unit can be a pixel in the image. Each unit in the entity can have an associated data element embedding that can characterize, e.g., a position of the unit in the spatial or temporal structure and/or features associated with the unit in the spatial structure. In another particular example, the entity can be a text, e.g., the entity can be a sequence of words, phrases, characters, or word pieces, in one or more languages. In yet another particular example, the entity can include a combination of different modalities, e.g., the entity can include a combination of audio, video, and label data. As another example the entity can comprise sensor data from one or more sensors that are configured to perceive one or more characteristics of a real-world environment such as image data, audio data, or so-called "fine touch" sensor data (which permits localization). Although a number of examples of network inputs 102 are described above, generally, the network input 102 can have any appropriate dimensionality and structure, and can include any appropriate type(s) of data.

The neural network system 100 can use the neural network 150 to process the network input 102 to generate the network output 108. The network output 108 can be, e.g., a classification output, a regression output, a sequence output (i.e., that includes a sequence of output elements), a segmentation output, an auto-encoding output, or any other appropriate network output or a combination thereof.

The neural network system 100 can flexibly modify the dimensionality of the network output 108, e.g., so as to generate sparse or partial network outputs 108. For example, if the network input 102 is an image, the network output 108 can be a segmentation of only a specified (proper) subset of the image. Generally, the network output 108 can be represented as a collection of output vectors, and the number of output vectors can be referred to as a "dimensionality" of the network output 108. As described in more detail below, the system 100 can control the dimensionality of the network output 108 using a set of query embeddings 106.

In addition to obtaining the network input 102, the system 100 can further obtain the set of query embeddings 106. The network input 102 can be provided, e.g., by a user of the system 100, through an application programming interface (API) made available by the system 100.

The set of query embeddings 106 may be provided in the same way, e.g. by a user of the system 100, or they may be predetermined i.e. the system may be configured to perform a particular task. The query embeddings 106 can be used by the system 100 to generate the network output 108 having a desired dimensionality. Where necessary for a particular task each query embedding in the set of query embeddings 106 can define relevant information for a corresponding output dimension in the network output 108. In other words, each query embedding can define, e.g., position and/or modality-specific features of a corresponding output dimension, e.g. where the network output comprises an output for a specific 1D, 2D or 3D position or for a specific data modality. Such a query embedding can be constructed by combining, e.g. concatenating or adding, a set of vectors into the query embedding to provide the information needed for the corresponding dimension of the network output.

The query embeddings 106 can be defined in any appropriate manner, e.g., they can be hand-engineered, learned, or defined as a function of the network input 102. In general the neural network system 100 is not dependent on the use of any particular type of query embedding and even simple embeddings can produce good results. During training the system is provided with the network input and the set of query embeddings to generate the network output. The system is trained to generate a network output that performs the prediction task. This is described further later.

Collectively, the set of query embeddings 106 can define a prediction task to be performed by the neural network 150 by processing the network input 102. The prediction task can be, e.g., a classification task, a regression task, a segmentation task, an auto-encoding task, or any other appropriate task or a combination thereof. In some implementations, each query embedding in the set of query embeddings 106 can be generated by combining (e.g., concatenating or summing) spatial, modality, task-specific, and/or any other appropriate features relevant to the corresponding output dimension in the network output 108.

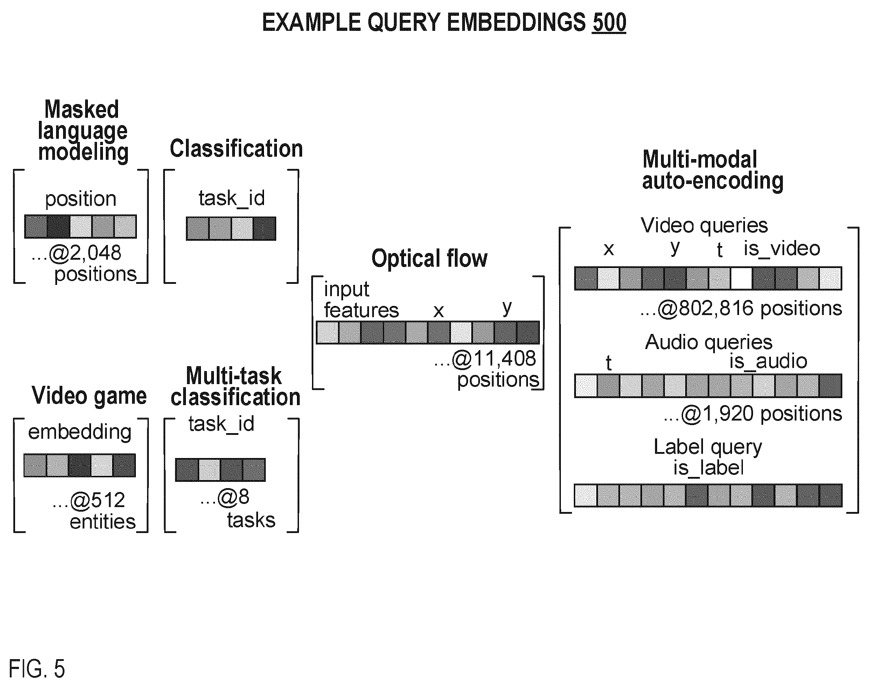

As a particular example, the network input 102 can include representations of a first image and a second image, each depicting the same scene, and the prediction task can be to estimate a two-dimensional displacement (e.g., optical flow) of points, e.g. pixels or a proper subset of pixels (i.e. not all the pixels), in the first image. In some implementations such a point may comprise a pixel or an image patch comprising multiple pixels. In such cases, each query embedding in the set of query embeddings 106 can specify, e.g., x and y coordinates of a corresponding point in the first image, and can include one or more further embeddings for the optical flow prediction task, e.g. the representation of the first image and of the second image for the point. That is, the set of query embeddings 106 can define a set of points in the first image for which to generate a prediction, where the prediction is to estimate optical flow. For example, a dimension of the network output may define a magnitude and direction of the optical flow at a point. Example query embeddings and prediction tasks are described in more detail below with reference to FIG. 4 and FIG. 5.

After obtaining the network input 102 and the set of query embeddings 106, the system 100 can use the neural network 150 to process the input 102 and generate the network output 108 having a desired dimensionality, e.g., an output that includes a respective dimension corresponding to each query embedding in the set of query embeddings 106. This process is described in more detail next.

The system 100 can process the network input 102 using an encoder block 110 of the neural network 150 to generate a representation of the network input 102 as a set of latent embeddings 104. A "latent embedding" can refer to an embedding in a latent space. Generally, the latent embeddings 104 can be included in a space of any appropriate dimensionality. Generally, the dimensionality of a set of embeddings can be defined by the number of embeddings (e.g., N) in the set of embeddings. In some implementations the encoder block processes the network input and an initial set of latent embeddings to generate the set of latent embeddings.

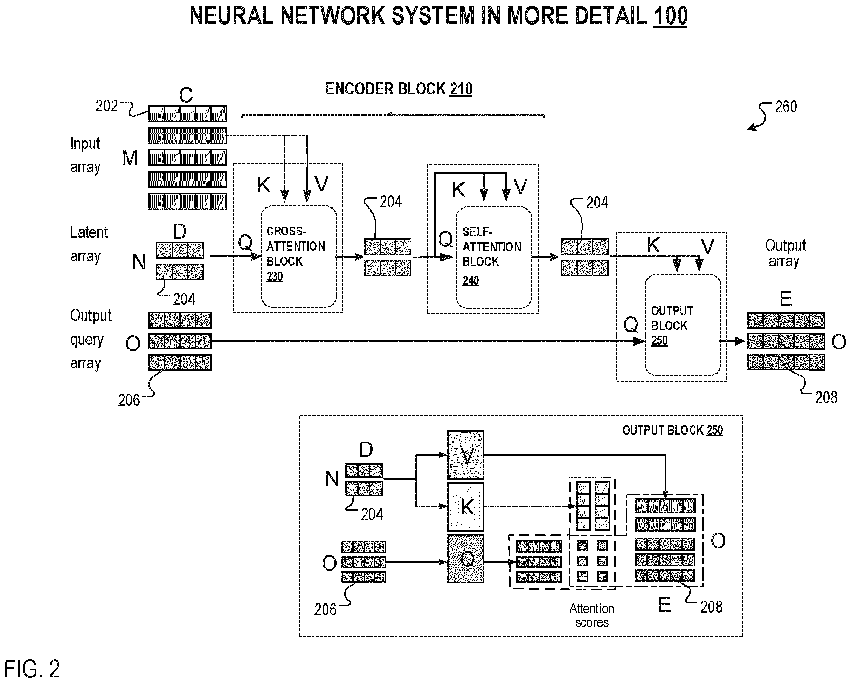

In some implementations, the dimensionality of the network input 102 can be much larger than the dimensionality of latent embeddings 104 and/or query embeddings 106. For example, if the network input 102 includes an image having dimensions *224 x* 224 pixels, and the number of data element embeddings (e.g., corresponding to each pixel in the image) is*M = 50176,* then the number of latent embeddings 104 can be, e.g., *N = 512,* such that *N* << *M.* The encoder block 110 can process the network input 102 to generate the representation of the input as the set of latent embeddings 104 in any appropriate manner. A particular example of this process is described in more detail below with reference to FIG. 2.

After generating the set of latent embeddings 104 using the encoder block 110, the neural network system 100 can use an output block 120 of the neural network 150 to process the set of latent embeddings 104 and the set of query embeddings 106 to generate the network output 108. In particular, the output block 120 can be configured to perform an "attention" operation. The attention operation can include updating each embedding in a first set of embeddings using attention over a second set of embeddings. In some implementations, after performing the attention operation (e.g., after updating each embedding), the output block 120 can process each updated embedding using one or more neural network layers, e.g., fully connected neural network layers. There are many different attention mechanisms that can be used; an example attention operation is described in more detail below with reference to FIG. 2.

In particular, the output block 120 can update each query embedding in the set of query embeddings 106 over the set of latent embeddings 104. Continuing with the example of optical flow described above, each query embedding in the set of query embeddings 106 can specify, e.g., x and y coordinates of a corresponding pixel in the first image, and an embedding specifying the optical flow prediction task. The output block 120 can generate a particular dimension of the network output 108 through cross-attention of the corresponding query embedding over the set of latent embeddings 106. Referring back to the previous example as an illustration, the dimension of the network output 108 can be, e.g., a single flow vector representing optical flow for the pixel in the first image defined by the query embedding. The output block 120 can repeat this process for each query embedding in the set of query embeddings 106, thereby generating each respective dimension of the network output 108. In some implementations, the outputs corresponding to each query embedding in the set of query embeddings 104 can be generated in parallel. This process is described in more detail below with reference to FIG. 2.

The encoder block 110 and the output block 120 can have any appropriate neural network architecture that enables them to perform their prescribed functions. For example, the encoder block 110 and the output block 120 can have any appropriate neural network layers (e.g., convolutional layers, fully connected layers, recurrent layers, attention layers, etc.) in any appropriate numbers (e.g., 2 layers, 5 layers, or 10 layers) and connected in any appropriate configuration (e.g., as a linear sequence of layers). The neural network system 100 can also additionally include any number of neural network blocks configured to perform any appropriate operation. Particular examples of the encoder block 110 and the output block 120 are described in more detail below with reference to FIG. 2.

In this manner, the system 100 can flexibly modify the dimensionality of the network output 108, e.g., by modifying the number of query embeddings 106, without restructuring the hidden layers of the neural network 150. Moreover, as described above, the prediction task being performed by the neural network 150 is defined by, and in some implementations can be modified using, the query embeddings 106. Thus the neural network system 100 can provide a flexible and general purpose neural network architecture that can be implemented to perform a variety of prediction tasks for network inputs of various modalities with minimal modification.

The neural network system 100 can further include a training engine that can train the neural network 150 on a set of training data over multiple training iterations. The training data can include a set of training examples, where each training example specifies: (i) a training input, and (ii) a target output that should be generated by the neural network 160 by processing the training input.

At each training iteration, the training engine can sample a batch of training examples from the training data, and process the training inputs specified by the training examples using the sequence of neural network blocks included in the neural network 150 (e.g., the encoder block 110 and the output block 120) to generate corresponding network outputs. In particular, for each training input, the neural network 150 processes the training input using the current model parameter values of the encoder block 110 to generate the set of latent embeddings 104. The neural network 150 processes the set of latent embeddings 104 and the set of query embeddings 106 using the current model parameter values of the output block 120 to generate the network output 108 corresponding to the training input.

The training engine can adjust the model parameter values of the encoder block 110 and the output block 120 to optimize an objective function that measures a similarity between: (i) the network outputs generated by the neural network 150, and (ii) the target network outputs specified by the training examples. The objective function can be, e.g., a cross-entropy objective function, a squared-error objective function, or any other appropriate objective function. In some implementations, during training, the network outputs generated by the neural network 150 can include only a fraction of the total set of possible outputs. In such cases, the objective function can be evaluated with reference to only the generated outputs, e.g., instead of the total set of outputs. This can accelerate the training of the neural network and improve training efficiency.

The training engine can determine gradients of the objective function, e.g., using backpropagation techniques. The training engine can update the model parameter values of the encoder block 110 and the output block 120 using the gradients, e.g., using any appropriate gradient descent optimization algorithm, e.g., Adam. The training engine can determine a performance measure of the neural network 150 on a set of validation data that is not used during training of the neural network 150. After training, the neural network system 100 can be used to perform a machine learning task, e.g., to process a network input and generate a network output.

In some implementations, the training engine can train the neural network 150 using reinforcement learning techniques. For example, the training engine can train the neural network 150 by iteratively adjusting the model parameter values of the neural network 150 by iteratively backpropagating gradients of a reinforcement learning objective function through the neural network 150 (e.g., the encoder block, the cross-attention block, or both). The reinforcement learning function can be any appropriate reinforcement learning objective function.

The neural network system 100 can be configured to perform any appropriate machine learning task. A few examples follow.

In some implementations, the system 100 uses the neural network 150 to perform an image or audio segmentation task. For example, the neural network can process a network input that includes an image or a series of audio samples that represent an audio waveform to generate a network output that defines, for each pixel in the input image or for each audio sample, a respective score distribution over a set of possible classes. The score for a class can define a likelihood that a corresponding pixel or sample is included in the class. For example for an image the possible classes can include, e.g., water, building, vehicle, pedestrian, etc. In this example, a query embedding can specify a position of a corresponding pixel in the input image or of a corresponding sample in the audio, and the dimension of the network output corresponding to the query embedding can define the score distribution for the corresponding pixel in the input image or sample in the audio. The image may be a moving image, i.e. a video. In a similar way the system 100 may use the neural network 150 to perform an image depth prediction task where the network output defines a predicted depth value for a corresponding pixel to obtain a (spatial 3D) depth map for the image.

In some implementations, the system 100 uses the neural network 150 to perform a protein modeling task, e.g., where the network input characterizes a protein (e.g., a multiple sequence alignment for the protein), and the network output characterizes a predicted structure of the protein (e.g., a respective three-dimensional (3-D) spatial position and orientation of each amino acid in the protein structure). In this example, a query embedding can specify an index of an amino acid in the amino acid sequence of the protein, and optionally, a type of the amino acid at the specified index (e.g., alanine, arginine, asparagine, etc.). The dimension of the network output corresponding to a query embedding can define the predicted spatial position and orientation of the amino acid specified by the query embedding.

In some implementations, the system 100 uses the neural network 150 to perform an agent control task, where the network input represents a sequence of one or more observations or other data characterizing states of an environment and the output defines an action to be performed by the agent in response to the most recent data in the sequence. The environment can be a real-world or a simulated environment, and the agent can be, e.g., a robot, an autonomous land, sea, or air vehicle, or a control system for an industrial facility. Each query embedding can specify a respective task to be performed by the agent in the environment, e.g., the task can be for the agent to navigate to a goal location in the environment, and the query embedding can specify the goal location.

In some implementations, the system 100 uses the neural network 150 to process a network input that represents audio samples in an audio waveform to perform speech recognition, e.g., to generate a network output that characterizes a sequence of phonemes, graphemes, characters, or words corresponding to the audio waveform. The audio samples define a sequence of samples and optionally the network input may also include an encoding of the position of a sample in the sequence. Each dimension of the network output can, for example, correspond to a respective time interval in the audio waveform and can define a respective score distribution over a set of possible phonemes, graphemes, characters, or words. In this example, the neural network can generate the network output, e.g., by a query embedding that defines: (i) a respective time interval in the audio waveform, e.g. a position in the sequence, and optionally (ii) a prediction task for the time interval in the audio waveform, e.g., decoding phonemes, graphemes, characters, or words corresponding to the time interval.

In some implementations, the system 100 uses the neural network 150 to perform a reconstruction task such as an auto-encoding task, e.g., by processing a network input to generate a network output that defines a predicted reconstruction of the network input. The network input can be, e.g., an image or video, an audio waveform, a point cloud, or a sequence of text. In this example, each query embedding can include data that specifies a corresponding position in the network input to be reconstructed, e.g., a spatial position in an image, a spatial and/or temporal position in the video, or a temporal window in an audio waveform. Optionally, each query embedding can also define a modality of the network input being reconstructed, e.g., defining whether the network input is an image, an audio waveform, or a point cloud. Each dimension of the network output can, for example, correspond to a reconstructed point of the network input in 1D, 2D or 3D as specified by the query embedding. More or fewer points than the original network input may be reconstructed. Points may be reconstructed serially and/or in parallel. For example the set of query embeddings may comprise a query embedding for each point in the network input e.g. pixel of an image or sample of an audio signal, or it may comprise a query embedding for just one point and the network output may be reconstructed serially one point at a time by specifying each desired point; or the set of query embeddings may reconstruct some but not all of the points in the network input.

In some implementations, the system 100 uses the neural network 150 for a neural machine translation task, e.g., to process a network input that represents a sequence of text, e.g., a sequence of words, phrases, characters, or word pieces, in one language, to generate a network output that is a translation of the sequence of text into another language, i.e., a sequence of text in the other language that is a translation of the input sequence of text. In this example, each query embedding can include data identifying, e.g., the natural language that the input sequence of text should be translated into (e.g., English, French, German, etc.). Furthermore, each query embedding can specify a corresponding position in the output sequence of text.

In some implementations, the system 100 uses the neural network 150 to perform an audio or audio-visual processing task. For example, if the network input represents a spoken utterance, then the network output generated by the neural network can be a score for each of a set of pieces of text, each score representing an estimated likelihood that the piece of text is the correct transcript for the utterance. In this example, each query embedding can be a representation of, or correspond to, a respective piece of text. As another example, if the network input represents a spoken utterance, the output generated by the neural network can indicate whether a particular word or phrase ("hotword") was spoken in the utterance. In this example, each query embedding can be, or correspond to, e.g., a one-hot embedding corresponding to a respective word or phrase.

In some implementations, the system 100 uses the neural network 150 to perform a text to speech task, where the network input represents text in a natural language or features of text in a natural language and the network output is a spectrogram, a waveform, or other data defining audio of the text being spoken in the natural language. In this example, each query embedding can be for identifing a respective speaking voice to be used in vocalizing the text (e.g., where each speaking voice corresponds to a voice of a respective person). Furthermore, each query embedding can specify a corresponding temporal window in the network output.

In some implementations, the system 100 uses the neural network 150 to perform a health prediction task, where the network input represents data derived from electronic health record data for a patient and the output is a prediction that is relevant to the future health of the patient, e.g., a predicted treatment that should be prescribed to the patient, the likelihood that an adverse health event will occur to the patient, or a predicted diagnosis for the patient. In this case, each query embedding can specify a corresponding time point, or period, in the life of the patient. In some implementations, the system 100 uses the neural network 150 to perform a text generation task, where the network input represents a sequence of text, and the output is another sequence of text, e.g., a completion of the input sequence of text, a response to a question posed in the input sequence, or a sequence of text that is about a topic specified by the first sequence of text. As another example, the network input can represent data other than text, e.g., an image, and the output sequence can be text that describes the data represented by the network input. In this example, each query embedding can specify a corresponding position in the output sequence of text.

In some implementations, the system 100 uses the neural network 150 to perform an image generation task, where the network input represents a conditioning input and the output is a sequence of intensity values for the pixels of an image.

In some implementations, the system 100 uses the neural network 150 to perform a genomics task, where the network input represents a fragment of a DNA sequence or other molecule sequence and the network output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on. In this example, each query embedding can specify a corresponding position in the DNA sequence.

In some implementations, the system 100 uses the neural network 150 to perform an image, video or audio classification task. The network input may then represent the pixels of an image or video, or samples of an audio waveform as previously described. Optionally the network input may include a position encoding for the pixels of the image or video or the samples of the audio; for a video the position encoding may be a spatial and/or temporal position. The network output defines a classification of the image, video or audio. The classification can include a respective score for each object category in a set of possible object categories (e.g., for an image, vehicle, pedestrian, bicyclist, etc.). The score for an object category can define a likelihood that the network input comprises an object that belongs to the object category, e.g. that the image or video depicts the object. The classification for a video may comprise a classification of an action depicted in the video, e.g. for gesture recognition. The set of query embeddings may comprise a single query embedding (which may be learned). In a similar way the system 100 can use the neural network 150 to perform an image or audio bounding box task, where the network output comprises a classification and a vector defining coordinates of a bounding box for the object in 1, 2 or 3 dimensions (here counting time as a dimension).

As previously mentioned, in general in the above examples references to an image or video include a point cloud. For example in some implementations, the system 100 uses the neural network 150 to perform a point cloud processing task, e.g., where the network input represents a point cloud (e.g., generated by a lidar or radar sensor) and the network output characterizes, e.g., a type of object represented by the point cloud. In this example, each query embedding can specify a corresponding spatial position of one or more points in the point cloud.

In some implementations, the system 100 uses the neural network 150 to perform an image or video captioning task. For example, the neural network can process a network input that includes an image or a video comprising a series of images to generate a network output that defines, for the image or for one or more of the series of images, a set of tokens that describe the image or video, where the tokens may represent words, parts of words, or sentences. The tokens may be defined deterministically, or stochastically, e.g. by sampling from one or more defined distributions. In the case of a video the query embedding can (but need not) specify a position in time of each of the series of images. As used here a position in time includes an order in time.

In some implementations, the network input is a multimodal input and the system 100 uses the neural network 150 to perform a multimodal task. In general such a multimodal input is a combination of two or more different types or modalities of data, where the different types of data may, but need not, represent the same or overlapping objects in the network input using the different modalities. Such multimodal data may comprise audio-visual data, comprising a combination of pixels of an image or of video and audio data representing samples of an audio waveform. As another example such multimodal data may comprise a combination of text data, e.g. tokens, representing text in a natural language and pixels of an image or of video or samples of an audio waveform. The multimodal task may be any of the tasks described above, but with the inclusion of an additional mode of data in the network input. As some examples the multimodal task may comprise a classification task, a segmentation task, a speech recognition task, a reconstruction task, a recognition task, a captioning task, and an agent control task. To construct the network input each modality type may be provided with a modality-specific embedding; the multimodal data may then be serialized into the 2D input array 202. In general the query embeddings may be as previously described but in some implementations with the addition of a modality-specific embedding to generate an output per modality. The embeddings may be learned embeddings. Where spatial or temporal position is incorporated into a query embedding, e.g. for video or audio data, this may be as previously described as the modality-specific embedding enables the system to select each modality. The network outputs may correspond to those previously described, but applied are provided for the multimodal input. For example a multimodal classification task may generate a network output that categorizes the multimodal input into one or more of a plurality of categories, e.g. by defining a score for each category of a plurality of possible categories for the input. Similarly a captioning task generate a network output for tokens that describe the multimodal input; a corresponding query may, but need not, include a spatial or temporal position for each query embedding; and so forth. As another example, where the multimodal data comprises a combination of text data and image or video or audio data the task may comprise processing the combination to provide a network output that defines whether the image or video or audio waveform is described by the text, e.g. by a particular caption, e.g. by defining a score for the text or caption. The query may be as previously described for classification; or may include position data to generate a respective score for each position represented by one of the query embeddings in the set of query embeddings.

In general in the above examples the network input may comprise raw data e.g. raw pixel data or audio samples, or feature embeddings e.g. defining spatial, temporal or spatiotemporal features obtained by pre-processing with a feature encoder neural network.

An example architecture of the neural network system 100 is described in more detail below with reference to FIG. 2.

FIG. 2 is a block diagram of an example architecture of the neural network system 100 in more detail. The neural network system 100 is an example of a system implemented as computer programs on one or more computers in one or more locations in which the systems, components, and techniques described below are implemented.

The neural network system 100 can be configured to obtain a network input 202, which can include a set of data element embeddings (e.g., "Input array") characterizing an entity. The entity can, e.g., include multiple units arranged in a spatial and/or temporal structure.

In some implementations, each data element embedding can correspond to a respective spatial position in the network input and can include a feature embedding based on features of the network input at that spatial position. For example, if the entity is an image, and the unit is a pixel in the image, the system can obtain the feature embedding by selecting a patch of image around that pixel and concatenating the pixels within the patch into a vector. As used herein references to a spatial position are to be understood as generally including a position in a sequence such as a sequence of words or a sequence of audio waveform samples.

In some implementations, each data element embedding can include a positional embedding that characterizes the spatial position corresponding to the data element embedding. For example, if the entity is a sequence of words, and each unit in the entity is a word, the system can generate the positional embedding based on the index of the word in the sequence of words. In some implementations, each data element embedding can include a modality embedding that defines a modality corresponding to the data element embedding. For example, if the network input is an audio waveform, the data element embedding can include a modality embedding that specifies that the network input is the audio waveform.

Generally, the network input can have dimensions *M x C,* where *M* is the number of data element embeddings, and C is the number of channels of each data element embedding.

The neural network system 100 can further obtain a set of query embeddings 206 (e.g., "Output query array") that collectively define a prediction task to be performed by the neural network 250 by processing the network input 202. The query embeddings 206 can have any appropriate dimensionality, e.g., the query embeddings can include O query vectors.

In some implementations, the neural network system 100 can additionally obtain an initial set of latent embeddings 204 (e.g., "Latent array"). The latent embeddings 204 may be predefined and/or initialized randomly or these may be learned, i.e. they may comprise a set of learned parameters each defining an element of the array, learned, e.g., like weights. That is, in some implementations the encoder block processes the network input and an initial set of latent embeddings to generate a representation of the network input as the set of latent embeddings. The set of latent embeddings 204 can have dimensions *N x D,* where *N* is the number of latent embeddings, and D is the number of channels of each latent embedding, both of which can be hyperparameters of the neural network system 100. In some implementations, the number of query embeddings O can be larger than the number of latent embeddings *N*, e.g., by a factor of at least two. Furthermore, the number of query embeddings O can be variable and independent of the number of latent embeddings *N*.

The neural network system 100 can process the network input 202 using the neural network 250 to generate a network output 208 (e.g., "Output array") that includes a respective dimension corresponding to each query embedding in the set of query embeddings 206. For example, the network output 208 can be represented by an *O x E* array, where *O* is the number of output vectors and E is the number of output elements in each output vector (a hyperparameter). The neural network system 100 can generate a respective dimension (e.g., a respective output vector) corresponding to each query embedding in the set of query embeddings 206. The number of output vectors can be the same as the number of query vectors.

The neural network system 100 can generate the network output 208 by using: an encoder block 210, and an output block 250. The encoder block 210 can include a sequence of one or more neural network blocks, e.g., (i) one or more cross-attention blocks 230, and (ii) one or more self-attention blocks 240. The encoder block 210 can be configured to process the network input 202 to generate a representation of the network input 202 as the set of latent embeddings 204. The output block 250 can be configured to process the set of latent embeddings 204, generated by the encoder block 210, and the set of query embeddings 206, to generate the network output 208. The attention blocks included in the neural network 250 are described in more detail next.

The cross-attention block 230, the self-attention block 240, and the output block 250, can each be configured to perform an attention operation, e.g., update each embedding in a first set of embeddings using attention over a second set of embeddings.

For example, for each target embedding in the first set of embeddings, each attention block can generate a respective attention weight for each embedding in the second set of embeddings, and generate a combined embedding based on the second set of embeddings and the corresponding attention weights. As a particular example, each attention block can generate the combined embedding as a weighted sum of the second set of embeddings, e.g., by multiplying each embedding in the second set of embeddings with the corresponding weight and summing the weighted embeddings. Each attention block can then use the combined embedding to update the target embedding in the first set of embeddings, e.g., by replacing the target embedding with the combined embedding, adding the combined embedding to the target embedding, or in any other appropriate manner.

In some implementations, the attention blocks can perform a query-key-value (*QKV*) attention operation, e.g., update each embedding in the first set of embeddings using attention over the second set of embeddings using query (*Q*)*,* key (K), and value (*V*) embeddings. In particular, each attention block can include: (i) a query sub-network, (ii) a key sub-network, and (iii) a value sub-network. For each target embedding in the first set of embeddings, the query sub-network can be configured to process the target embedding in the first set of embeddings to generate a respective query embedding (Q) for the target embedding. The key sub-network can be configured to process each embedding in the second set of embeddings to generate a respective key embedding (K) for each embedding in the second set of embeddings. Similarly, the value sub-network can be configured to process each embedding in the second set of embeddings to generate a respective value embedding (*V*) for each embedding in the second set of embeddings.

Each attention block can then use the query embeddings (*Q*)*,* the key embeddings (K), and the value embeddings (*V*), to update each target embedding in the first set of embeddings using attention over the second set of embeddings. Specifically, each attention block can generate the attention weight for each embedding in the second set of embeddings, e.g., as an inner (e.g., dot) product of the query embedding (*Q*) with each of the key embeddings (K). Based on the second set of embeddings and the attention weights, each attention block can generate the combined embedding, e.g., as a linear combination of the value embeddings (*V*) weighted by their respective attention weights. Lastly, each attention block can update the target embedding in the first set of embeddings using the combined embedding, e.g., by replacing the target embedding in the first set of embeddings with the weighted sum of the value embeddings (*V*).

In some implementations, the first set of embeddings and the second set of embeddings can be the same set of embeddings. In such cases, the attention operation (e.g., the QKV attention operation) can be referred to as a "self-attention" operation. The self-attention operation can be performed by, e.g., the self-attention block 240. For example, the first set of embeddings can be the set of latent embeddings 204, the second set of embeddings can also be the set of latent embeddings 204, and the self-attention block 240 can update each latent embedding in the set of latent embeddings 204 using self-attention over the set of latent embeddings 204. In some implementations, the self-attention block 240 can repeatedly update each latent embedding in the set of latent embeddings 204 using self-attention over the set of latent embeddings 204.

In some implementations, the first set of embeddings and the second set of embeddings can be different sets of embeddings. In such cases, the attention operation (e.g., the *QKV* attention operation) can be referred to as a "cross-attention" operation. The cross-attention operation can be performed by, e.g., the cross-attention block 230 included in the encoder 210, and the output block 250.

As a particular example, in the case of the cross-attention block 230 included in the encoder 210, the first set of embeddings can be the set of latent embeddings 204 (e.g., initialized randomly or initialized to previously learned values), and the second set of embeddings can be the data element embeddings 202 provided to the neural network 250 as an input. The cross-attention block 230 can update each latent embedding in the set of latent embeddings 204 using cross-attention over some, or all, data element embeddings in the set of data element embeddings 202.

As another particular example, in the case of the output block 250, the first set of embeddings can be the set of query embeddings 206, and the second set of embeddings can be the set of latent embeddings 204 generated by the self-attention block 240. The output block 250 can update each query embedding in the set of query embeddings 206 using cross-attention over the set of latent embeddings 204. In other words, the output block 250 can generate each dimension of the network output 208 by cross-attention of a corresponding query embedding in the set of query embeddings 206 over the set of latent embeddings 204. After cross-attending each query embedding in the set of query embeddings 206 over the set of latent embeddings 204, the output block 250 can generate the complete neural network output 208 that includes a respective dimension for each query embedding in the set of query embeddings 206.

If the neural network system 100 obtains a second, different, set of query embeddings 206 (e.g., specifying a different number of query vectors, different spatial positions, and/or different modality-specific features), the neural network system 100 can process the network input 202 and the second set of query embeddings 206 as described above to generate the network output 208 corresponding to each query embedding in the second, different, set of query embeddings 206. Accordingly, by modifying the query embeddings 206, the neural network system 100 can flexibly modify the dimensionality of the network output 208 and/or the prediction task being performed by the neural network 250.

An example process for using the neural network system 100 to generate the neural network output 208 is described in more detail next.

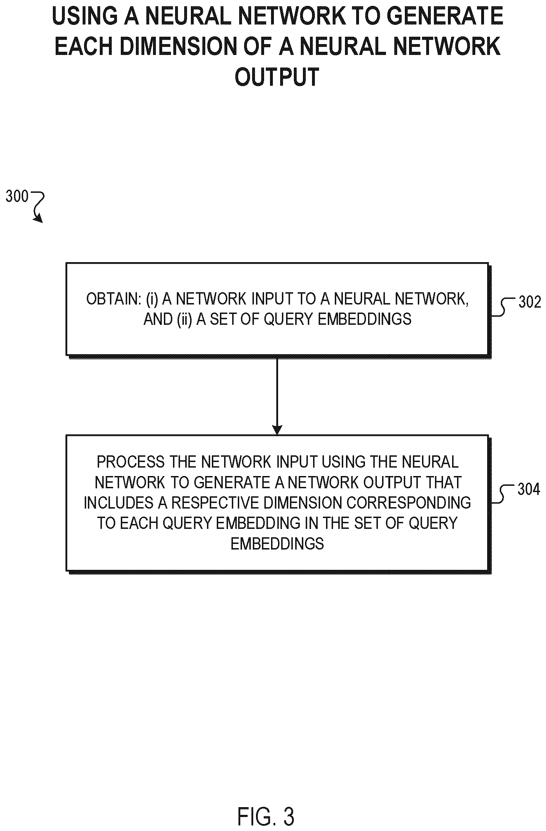

FIG. 3 is a flow diagram of an example process 300 for using a neural network system to generate a neural network output. For convenience, the process 300 will be described as being performed by a system of one or more computers located in one or more locations. For example, a neural network system, e.g., the neural network system 100 in FIG. 1, or the neural network system 100 in FIG. 2, appropriately programmed in accordance with this specification, can perform the process 300.

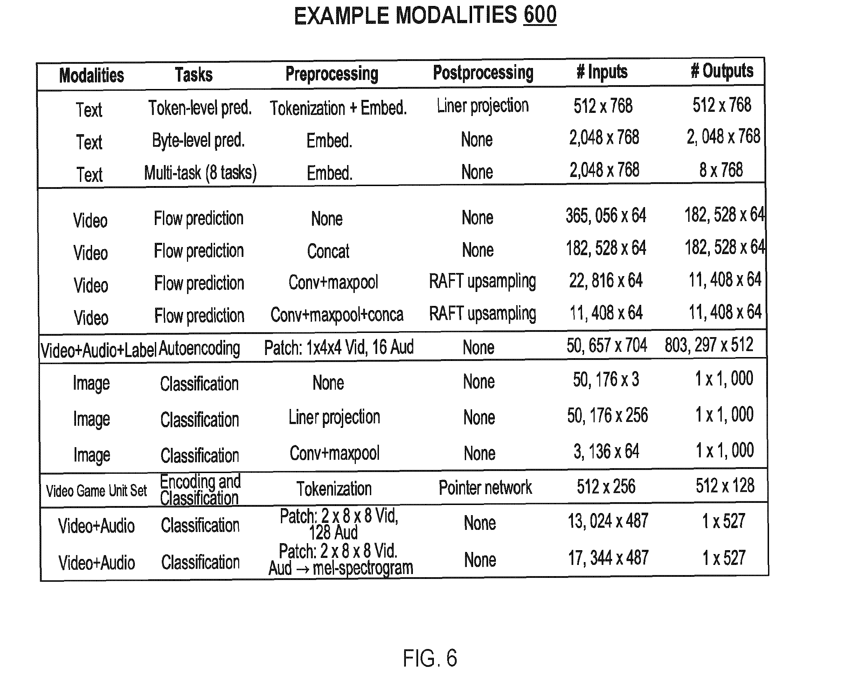

The system obtains: (i) a network input to a neural network, and (ii) a set of query embeddings that collectively define a prediction task to be performed by the neural network by processing the network input (302). In some implementations, the network input can include multi-modal data, as one example, video data, audio data, and label data. Generally, as illustrated in FIG. 6A, the network input can include any appropriate type of data or a combination thereof.

The system processes the network input using the neural network to generate the network output that comprises a respective dimension corresponding to each query embedding in the set of query embeddings (304).

For example, the system can process the network input using an encoder block of the neural network to generate a representation of the network input as a set of latent embeddings.

Then, the system can process: (i) the set of latent embeddings, and (ii) the set of query embeddings, using a cross-attention block, e.g. the above-described output block 250, that generates each dimension of the network output by cross-attention (e.g., query-key-value attention) of a corresponding query embedding over the set of latent embeddings. For example, as described above with reference to FIG. 2, the system can generate a respective attention weight for each latent embedding based on: (i) the query embedding, and (ii) the latent embedding, and generate the dimension of the network output corresponding to the query embedding based on the attention weights for the latent embeddings. In particular, the system can process each latent embedding to generate a value embedding of the latent embedding. Then, the system can combine the value embeddings using the attention weights. Lastly, the system can generate the dimension of the network output corresponding to the query embedding based at least in part on a result of combining the value embeddings using the attention weights.

In some implementations, the query embedding can define a respective spatial position in the network input. In such cases, the dimension of the network output that corresponds to the query embedding can define a respective prediction relevant to the spatial position in the network input. For example, as illustrated in FIG. 4, the network input can be an image having a size of *100 x 100* pixels, and each query embedding can define a respective spatial position (e.g., *x* and y coordinates) of a corresponding pixel in the image. The prediction task can be, e.g., to reconstruct the original image. The set of query embeddings can include *10,000* query vectors, e.g., a vector for each pixel in the image. The dimension of the network output that corresponds to the query embedding can define a respective prediction relevant to the spatial position in the network input, e.g., a reconstruction of the pixel in the image defined by the query embedding.

In some implementations, the query embedding can include one or more input features from a respective spatial position in the network input. In such cases, the dimension of the network output that corresponds to the query embedding can define a respective prediction relevant to the spatial position in the network input. For example, as illustrated in FIG. 5, for the optical flow prediction task, each query embedding can specify one or more input features at a respective spatial position in the network input, e.g., the spatial position (e.g., *x* and y coordinates) of the pixel in the image and one or more input features associated with that pixel. For example in the network input two images can be concatenated so that corresponding pixels are indexed by the same (M) dimension of the input array (concatenated in the channel dimension, C); or in another approach two images are not concatenated and the network input, and optionally the query embedding, may then also be provided with a time encoding feature. In one example, the input feature of the pixel in the image can be a patch of the image around that pixel that is concatenated into a vector. The dimension of the network output corresponding to the query embedding defining that pixel in the image can specify, e.g., a predicted flow vector for that pixel in the image.

In some implementations, the query embedding can define a modality of the network input. For multi-modal inputs, e.g., inputs including a video, an audio, and a label, all three modalities can be specified by each query embedding in the set of query embeddings. Generally, query embeddings can be represented in a variety of different ways. As a particular example, query embeddings can be represented as one-hot embeddings.

In some implementations, the set of query embeddings can collectively define multiple prediction tasks, e.g., each query embedding can define a respective prediction task. In such cases, the dimension of the network output that corresponds to the query embedding can define a prediction output for the prediction task specified by the query embedding. The prediction tasks can include, e.g., a classification task, a regression task, a segmentation task, an auto-encoding task, or any other appropriate task. For example, as illustrated in FIG. 5, the embedding "task_id" can specify a particular prediction task. In the case of eight prediction tasks, the set of query embeddings can include eight query embeddings, each specifying a particular prediction task.

Example query embeddings and prediction tasks are described in more detail below with reference to FIG. 4 and FIG. 5.

FIG. 4 illustrates example query embeddings 400 that can be used by a neural network system (e.g., the system 100 in FIG. 1, or the system 100 in FIG. 2) to generate a neural network output 408.

As illustrated in FIG. 4, the network input 402 can be an image. The prediction task to be performed by a neural network included in the neural network system can be an auto-encoding task, e.g., a reconstruction of the original image 402. In this case, each query embedding in the set of query embeddings can define a respective spatial position (e.g., *x* and y coordinates) of a corresponding pixel in the image 402. The image 402 can have a size of *100 x 100* pixels, and the set of query embeddings can include *10,000* query vectors, e.g., a vector for each pixel in the image 402.

As described above with reference to FIG. 1 and FIG. 2, the neural network can include an encoder 410 and an output block 420. The encoder 410 can process the image 402 to generate a representation of the image 402 as a set of latent embeddings 404. The output block 420 can process the set of latent embeddings 404 and the set of query embeddings 404 to generate the network output 408 by cross-attention of a corresponding query embedding over the set of latent embeddings 404. The network output 408 can be, e.g., a reconstruction of the image 402, where each pixel is represented by a corresponding query embedding in the set of query embeddings 400.

FIG. 5 illustrates another example of query embeddings 500. Generally, the query embeddings can be constructed with output-specific features to produce network outputs with different semantics.

For example, if the network output is a sequence of words, then the query embeddings can include position embeddings, where each position embedding specifies a position of the respective word in the sequence of words. As a particular example, the position embedding can be based on the index of the word in the sequence of words. In another example, if the network output is a two-dimensional array of pixels, then the position embedding can be based on the x-y coordinates of the pixel in the array of pixels. In yet another example, if the network output is a point cloud, then the positional embedding can be based on the x-y-z coordinates of the point in the point cloud. In some implementations, the position embedding can be, e.g., a Fourier feature positional encoding having frequency bands that are spaced log-linearly over a predefined target frequency range. In some implementations both "raw" coordinates e.g. x, y or z, and Fourier features may be included.

In some implementations, input features for the target output can also be used to query, either alone, or alongside position features. For example, if the network output is an image, the input feature of a pixel in the image can be, e.g., a patch of the image around that pixel that is concatenated into a vector. In another example, if the output is an audio waveform, then the input feature of a particular time point in the audio waveform can be the amplitude of the waveform at that time point.

For multi-task, or multi-modal settings, an embedding for each: task, or modality, respectively, can be used. For classification tasks, a single learned embedding can be used. In particular, as described above with reference to FIG. 1, a training engine can train the neural network. As part of the training, the training engine can train the embeddings concurrently with the neural network, e.g., by backpropagating gradients of the loss through the neural network and into the embeddings. For tasks with heterogeneous outputs like, e.g., multi-modal auto-encoding, features that are specific to some queries (e.g., spatial position represented by *x* and y coordinates) can be combined with modality embeddings. In the case of multi-modal auto-encoding, each query embedding can specify the modality that it is desirable to reconstruct.

FIG. 6 illustrates example modalities 600 of inputs that can be processed by a neural network system (e.g., the system 100 in FIG. 1, or the system 100 in FIG. 2). The system can be used on domains with a wide variety of input and output spaces, including multi-task language understanding, dense visual tasks like optical flow, and hybrid dense/sparse multi-modal tasks such as video + audio + class auto-encoding. In some implementations, the inputs can be pre-processed and/or post-processed, e.g., to reduce the size of very large inputs and/or outputs, respectively. The last two columns illustrate the dimensionality of the inputs and the dimensionality of the respective outputs.

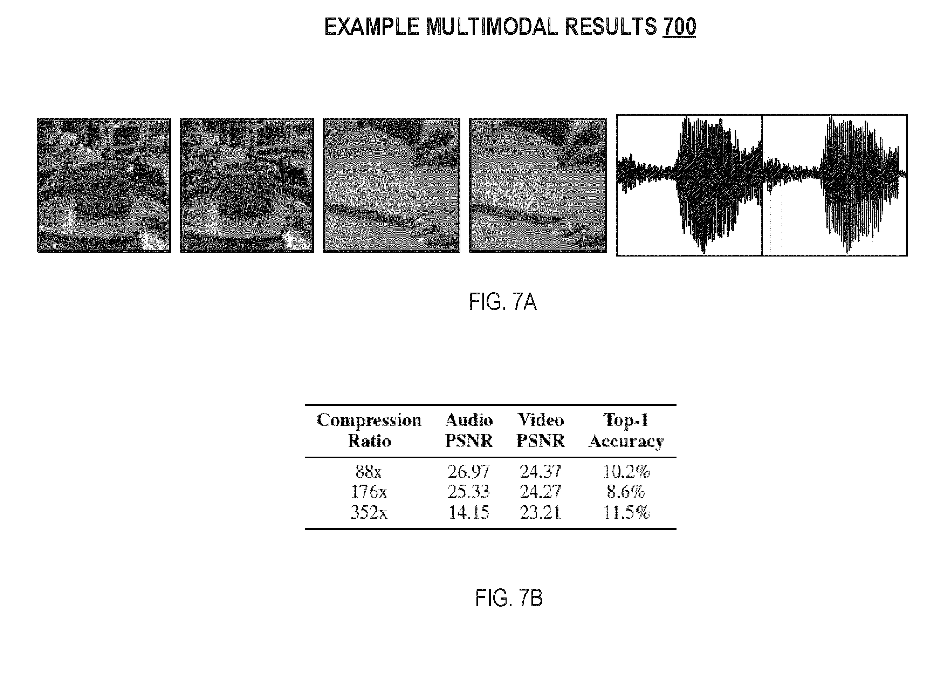

FIG. 7A and FIG. 7B illustrate example multi-modal results 700, e.g., audio-video-label auto-encoding. Inputs are shown on the left and reconstructions are shown on the right. The neural network system is able to jointly represent modalities with very different properties and achieve a substantially high prediction accuracy. In FIG. 7B, "PSNR" refers to peak signal to noise ratio.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. In some cases, multitasking and parallel processing may be advantageous.

## Claims

1. A method performed by one or more data processing apparatus, the method comprising:
obtaining: (i) a network input (102; 202) to a neural network (150) wherein the network input comprises a set of data element embeddings, and (ii) a set of query embeddings (106; 206) that collectively define a prediction task to be performed by the neural network by processing the network input;
processing the network input using the neural network to generate a network output (108; 208) that comprises a respective dimension corresponding to each query embedding in the set of query embeddings, comprising:
processing the network input using an encoder block (110) of the neural network to generate a representation of the network input as a set of latent embeddings (104; 204), comprising initializing the set of latent embeddings,
wherein the encoder block of the neural network comprises one or more cross-attention blocks (230) that each perform operations comprising
updating each latent embedding in the set of latent embeddings using attention over some or all of the data element embeddings in the set of data element embeddings,
wherein the encoder block of the neural network comprises one or more self-attention blocks (240) that each perform operations comprising
updating each latent embedding in the set of latent embeddings using attention over the set of latent embeddings; and
processing: (i) the set of latent embeddings, and (ii) the set of query embeddings, using a cross-attention block (120; 250) that generates each dimension of the network output by cross-attention of a corresponding query embedding over the set of latent embeddings; and
a) wherein the network input comprises a still or moving image, and the prediction task comprises an image segmentation task, an image depth prediction task, an image reconstruction task, an image generation task, an image classification task, an image bounding box generation task, or an image captioning task; or
b) wherein the network input comprises representations of a first and second image each depicting the same scene, and the prediction task comprises an optical flow estimation task; or
c) wherein the network input comprises an audio input, and the prediction task comprises a speech recognition task, or an audio segmentation task; or
d) wherein the network input represents text in a natural language, and the prediction task comprises a text to speech task; or
e) wherein the network input represents a sequence of observations characterizing states of a real-world environment, and the prediction task comprises an agent control task to navigate to a goal location in the environment, wherein the agent comprises a robot or autonomous vehicle; or
f) wherein the network input represents a fragment of a DNA sequence, and the prediction task comprises a promoter site prediction task.

2. The method of claim 1, wherein for each of one or more of the query embeddings:
the query embedding defines a respective spatial position in the network input; and
the dimension of the network output that corresponds to the query embedding defines a respective prediction relevant to the spatial position in the network input.

3. The method of any preceding claim, wherein for each of one or more of the query embeddings:
the query embedding comprises one or more input features from a respective spatial position in the network input; and
the dimension of the network output that corresponds to the query embedding defines a respective prediction relevant to the spatial position in the network input.

4. The method of any preceding claim, wherein for each of one or more query embeddings:
the query embedding defines a modality of the network input.

5. The method of any preceding claim, wherein the set of query embeddings collectively define a plurality of prediction tasks, and wherein for each of one or more of the query embeddings:
the query embedding specifies a respective prediction task from the plurality of prediction tasks; and
the dimension of the network output that corresponds to the query embedding defines a prediction output for the prediction task specified by the query embedding.

6. The method of claim 5, wherein the plurality of prediction tasks comprise one or more of: a classification task, a regression task, a segmentation task, or an auto-encoding task.

7. The method of any preceding claim, wherein generating a dimension of the network output by cross-attention of a corresponding query embedding over the set of latent embeddings comprises:
generating a respective attention weight for each latent embedding based on: (i) the query embedding, and (ii) the latent embedding; and
generating the dimension of the network output corresponding to the query embedding based on the attention weights for the latent embeddings.

8. The method of claim 7, wherein generating the dimension of the network output corresponding to the query embedding based on the attention weights for the latent embeddings comprises:
processing each latent embedding to generate a value embedding of the latent embedding;
combining the value embeddings using the attention weights; and
generating the dimension of the network output corresponding to the query embedding based at least in part on a result of combining the value embeddings using the attention weights; in particular wherein the cross-attention is query-key-value attention.

9. The method of any preceding claim, wherein a number of query embeddings in the set of query embeddings is larger than a number of latent embeddings in the set of latent embeddings; in particular wherein the number of query embeddings in the set of query embedding is larger than the number of latent embeddings in the set of latent embeddings by a factor of at least 2.

10. The method of any preceding claim, wherein a number of latent embeddings in the set of latent embeddings is predefined, and a number of query embeddings in the set of query embeddings is variable and independent of the number of latent embeddings in the set of latent embeddings.

11. The method of any preceding claim, wherein the network input comprises multi-modal data.

12. The method of any preceding claim, wherein a number of latent embeddings in the set of latent embeddings is less than a number of data element embeddings in the set of data element embeddings.

13. The method of any preceding claim, wherein each data element embedding corresponds to a respective spatial position in the network input and comprises i) a feature embedding based on features of the network input at the spatial position and/or ii) a positional embedding that characterizes the spatial position; and/or wherein each data element embedding comprises a modality embedding that defines a modality corresponding to the data element embedding.

14. A system comprising:
one or more computers; and
one or more storage devices communicatively coupled to the one or more computers, wherein the one or more storage devices store instructions that, when executed by the one or more computers, cause the one or more computers to perform the operations of the respective method of any one of claims 1-13.

15. One or more non-transitory computer storage media storing instructions that when executed by one or more computers cause the one or more computers to perform the operations of the respective method of any one of claims 1-13.

## Patentansprüche

1. Verfahren, das von einer oder mehreren Datenverarbeitungsvorrichtungen durchgeführt wird, wobei das Verfahren Folgendes umfasst:
Erlangen: (i) eines Netzwerkeingangs (102; 202) zu einem neuronalen Netzwerk (150), wobei der Netzwerkeingang einen Satz von Datenelementeinbettungen umfasst, und (ii) eines Satzes von Abfrageeinbettungen (106; 206), die gemeinsam eine Vorhersageaufgabe definieren, die durch das neuronale Netzwerk durch Verarbeiten des Netzwerkeingangs durchzuführen ist;
Verarbeiten des Netzwerkeingangs unter Verwendung des neuronalen Netzes, um einen Netzwerkausgang (108; 208) zu erzeugen, der eine jeweilige Dimension umfasst, die jeder Abfrageeinbettung in dem Satz von Abfrageeinbettungen entspricht, umfassend:
Verarbeiten des Netzwerkeingangs unter Verwendung eines Codiererblocks (110) des neuronalen Netzwerks, um eine Darstellung des Netzwerkeingangs als einen Satz latenter Einbettungen (104; 204) zu erzeugen, umfassend Initialisieren des Satzes latenter Einbettungen,
wobei der Codiererblock des neuronalen Netzwerks einen oder mehrere Queraufmerksamkeitsblöcke (230) umfasst, die jeweils Vorgänge durchführen, umfassend
Aktualisieren jeder latenten Einbettung in dem Satz latenter Einbettungen unter Verwendung der Aufmerksamkeit über einige oder alle Datenelementeinbettungen in dem Satz von Datenelementeinbettungen,
wobei der Codiererblock des neuronalen Netzwerks einen oder mehrere Selbstaufmerksamkeitsblöcke (240) umfasst, die jeweils Vorgänge durchführen, umfassend
Aktualisieren jeder latenten Einbettung in dem Satz latenter Einbettungen unter Verwendung der Aufmerksamkeit über den Satz latenter Einbettungen; und
Verarbeiten: (i) des Satzes latenter Einbettungen und (ii) des Satzes von Abfrageeinbettungen unter Verwendung eines Queraufmerksamkeitsblocks (120; 250), der jede Dimension des Netzwerkausgangs durch Queraufmerksamkeit einer entsprechenden Abfrageeinbettung über den Satz latenter Einbettungen erzeugt; und
a) wobei der Netzwerkeingang ein Stand- oder ein Bewegungsbild umfasst und die Vorhersageaufgabe eine Bildsegmentierungsaufgabe, eine Bildtiefenvorhersageaufgabe, eine Bildrekonstruktionsaufgabe, eine Bilderzeugungsaufgabe, eine Bildklassifizierungsaufgabe, eine Bildbegrenzungskastenerzeugungsaufgabe oder eine Bildbeschriftungsaufgabe umfasst; oder
b) wobei der Netzwerkeingang Darstellungen eines ersten und eines zweiten Bildes umfasst, die jeweils dieselbe Szene abbilden, und die Vorhersageaufgabe eine optische Strömungsschätzung umfasst; oder
c) wobei der Netzwerkeingang einen Audioeingang umfasst und die Vorhersageaufgabe eine Spracherkennungsaufgabe oder eine Audiosegmentierungsaufgabe umfasst; oder
d) wobei der Netzwerkeingang Text in einer natürlichen Sprache darstellt und die Vorhersageaufgabe eine Text-zu-Sprache-Aufgabe umfasst; oder
e) wobei der Netzwerkeingang eine Sequenz von Beobachtungen darstellt, die Zustände einer realen Umgebung kennzeichnen, und die Vorhersageaufgabe eine Agentensteuerungsaufgabe umfasst, um zu einem Zielstandort in der Umgebung zu navigieren, wobei der Agent einen Roboter oder ein autonomes Fahrzeug umfasst; oder
f) wobei der Netzwerkeingang ein Fragment einer DNA-Sequenz darstellt und die Vorhersageaufgabe eine Promotorstellen-Vorhersageaufgabe umfasst.

2. Verfahren nach Anspruch 1, wobei für jede einer oder mehrerer der Abfrageeinbettungen:
die Abfrageeinbettung eine jeweilige räumliche Position in dem Netzwerkeingang definiert; und
die Dimension des Netzwerkausgangs, der der Abfrageeinbettung entspricht, eine jeweilige Vorhersage definiert, die für die räumliche Position in dem Netzwerkeingang relevant ist.

3. Verfahren nach einem der vorhergehenden Ansprüche, wobei für jede einer oder mehrerer der Abfrageeinbettungen:
die Abfrageeinbettung eine oder mehrere Eingangsmerkmale aus einer jeweiligen räumlichen Position in dem Netzwerkeingang umfasst; und
die Dimension des Netzwerkausgangs, der der Abfrageeinbettung entspricht, eine jeweilige Vorhersage definiert, die für die räumliche Position in dem Netzwerkeingang relevant ist.

4. Verfahren nach einem der vorhergehenden Ansprüche, wobei für jede einer oder mehrerer der Abfrageeinbettungen:
die Abfrageeinbettung eine Modalität des Netzwerkeingangs definiert.

5. Verfahren nach einem der vorhergehenden Ansprüche, wobei der Satz von Abfrageeinbettungen gemeinsam eine Vielzahl von Vorhersageaufgaben definiert und wobei für jede der einen oder mehreren Abfrageeinbettungen:
die Abfrageeinbettung eine jeweilige Vorhersageaufgabe aus der Vielzahl von Vorhersageaufgaben spezifiziert; und
die Dimension des Netzwerkausgangs, der der Abfrageeinbettung entspricht, einen Vorhersageausgang für den durch die Abfrageeinbettung spezifizierte Vorhersageaufgang definiert.

6. Verfahren nach Anspruch 5, wobei die Vielzahl von Vorhersageaufgaben eines oder mehrere von Folgendem umfasst: eine Klassifizierungsaufgabe, eine Regressionsaufgabe, eine Segmentierungsaufgabe oder eine Auto-Codierungsaufgabe.

7. Verfahren nach einem der vorhergehenden Ansprüche, wobei das Erzeugen einer Dimension des Netzwerkausgangs durch Queraufmerksamkeit einer entsprechenden Abfrageeinbettung über den Satz latenter Einbettungen Folgendes umfasst:
Erzeugen einer jeweiligen Aufmerksamkeitsgewichtung für jede latente Einbettung, basierend auf: (i) der Abfrageeinbettung und (ii) der latenten Einbettung; und
Erzeugen der Dimension des Netzwerkausgangs, die der Abfrageeinbettung entspricht, basierend auf der Aufwmerksamkeitsgewichtung für die latenten Einbettungen.

8. Verfahren nach Anspruch 7, wobei das Erzeugen der Dimension des Netzwerkausgangs, die der Abfrageeinbettung entspricht, basierend auf der Aufmerksamkeitsgewichtung für die latenten Einbettungen Folgendes umfasst:
Verarbeiten jeder latenten Einbettung, um eine Werteinbettung der latenten Einbettung zu erzeugen;
Kombinieren der Werteinbettungen unter Verwendung der Aufmerksamkeitsgewichte; und
Erzeugen der Dimension des Netzwerkausgangs, der der Abfrageeinbettung entspricht, basierend zumindest teilweise auf einem Ergebnis des Kombinierens der Werteinbettungen unter Verwendung der Aufmerksamkeitsgewichte; insbesondere wobei die Queraufmerksamkeit eine Abfrage-Schlüssel-Wert-Aufmerksamkeit ist.

9. Verfahren nach einem der vorhergehenden Ansprüche, wobei eine Anzahl von Abfrageeinbettungen in dem Satz von Abfrageeinbettungen größer ist als eine Anzahl von latenten Einbettungen in dem Satz von latenten Einbettungen; insbesondere wobei die Anzahl von Abfrageeinbettungen in dem Satz von Abfrageeinbettungen größer ist als die Anzahl von latenten Einbettungen in dem Satz von latenten Einbettungen um einen Faktor von mindestens 2.

10. Verfahren nach einem der vorhergehenden Ansprüche, wobei eine Anzahl von latenten Einbettungen in dem Satz von latenten Einbettungen vordefiniert ist und eine Anzahl von Abfrageeinbettungen in dem Satz von Abfrageeinbettungen variabel und unabhängig von der Anzahl von latenten Einbettungen in dem Satz von latenten Einbettungen ist.

11. Verfahren nach einem der vorhergehenden Ansprüche, wobei der Netzwerkeingang multimodale Daten umfasst.

12. Verfahren nach einem der vorhergehenden Ansprüche, wobei eine Anzahl latenter Einbettungen in dem Satz latenter Einbettungen kleiner ist als eine Anzahl von Datenelementeinbettungen in dem Satz von Datenelementeinbettungen.

13. Verfahren nach einem der vorstehenden Ansprüche, wobei jede Datenelementeinbettung einer jeweiligen räumlichen Position in dem Netzwerkeingang entspricht und Folgendes umfasst: i) eine Merkmaleinbettung basierend auf Merkmalen des Netzwerkeingangs an der räumlichen Position und/oder ii) eine Positionseinbettung, die die räumliche Position kennzeichnet; und/oder wobei jede Datenelementeinbettung eine Modalitätseinbettung umfasst, die eine der Datenelementeinbettung entsprechende Modalität definiert.

14. System, umfassend:
einen oder mehrere Computer; und
eine oder mehrere Speichervorrichtungen, die kommunikativ an den einen oder die mehreren Computer gekoppelt sind, wobei die eine oder mehreren Speichervorrichtungen Anweisungen speichern, die bei Ausführung durch den einen oder die mehreren Computer den einen oder die mehreren Computer dazu veranlassen, Vorgänge des jeweiligen Verfahren nach einem der Ansprüche 1-13 durchzuführen.

15. Ein oder mehrere nichttransitorische Computerspeichermedien, die Anweisungen speichern, die, wenn sie durch einen oder mehrere Computer ausgeführt werden, den einen oder die mehreren Computer dazu veranlassen, die Vorgänge des jeweiligen Verfahrens nach einem der Ansprüche 1-13 durchzuführen.

## Revendications

1. Procédé réalisé par un ou plusieurs appareils de traitement de données, le procédé comprenant :
l'obtention : (i) d'une entrée de réseau (102 ; 202) vers un réseau neuronal (150) dans lequel l'entrée de réseau comprend un ensemble d'incorporations d'éléments de données, et (ii) un ensemble d'incorporations de requêtes (106 ; 206) qui définissent collectivement une tâche de prédiction à réaliser par le réseau neuronal en traitant l'entrée de réseau ;
le traitement de l'entrée de réseau à l'aide du réseau neuronal pour générer une sortie de réseau (108 ; 208) qui comprend une dimension respective correspondant à chaque incorporation de requête dans l'ensemble d'incorporations de requêtes, comprenant :
le traitement de l'entrée de réseau à l'aide d'un bloc codeur (110) du réseau neuronal pour générer une représentation de l'entrée de réseau sous la forme d'un ensemble d'incorporations latentes (104 ; 204), comprenant l'initialisation de l'ensemble d'incorporations latentes,
dans lequel le bloc codeur du réseau neuronal comprend un ou plusieurs blocs d'attention croisée (230) qui réalisent chacun des opérations comprenant
la mise à jour de chaque incorporation latente dans l'ensemble d'incorporations latentes à l'aide d'une attention sur la totalité ou une partie des incorporations d'éléments de données dans l'ensemble d'incorporations d'éléments de données,
dans lequel le bloc codeur du réseau neuronal comprend un ou plusieurs blocs d'auto-attention (240) qui réalisent chacun des opérations comprenant
la mise à jour de chaque incorporation latente dans l'ensemble d'incorporations latentes à l'aide d'une attention sur l'ensemble d'incorporations latentes ; et
le traitement : (i) de l'ensemble d'incorporations latentes, et (ii) de l'ensemble d'incorporations de requêtes, à l'aide d'un bloc d'attention croisée (120 ; 250) qui génère chaque dimension de la sortie de réseau par attention croisée d'une incorporation de requête correspondante sur l'ensemble d'incorporations latentes ; et
a) dans lequel l'entrée de réseau comprend une image fixe ou animée, et la tâche de prédiction comprend une tâche de segmentation d'image, une tâche de prédiction de profondeur d'image, une tâche de reconstruction d'image, une tâche de génération d'image, une tâche de classification d'image, une tâche de génération de cadre de contour d'image, ou une tâche de sous-titrage d'image ; ou
b) dans lequel l'entrée de réseau comprend des représentations d'une première et d'une seconde image représentant chacune la même scène, et la tâche de prédiction comprend une tâche d'estimation de flux optique ; ou
c) dans lequel l'entrée de réseau comprend une entrée audio, et la tâche de prédiction comprend une tâche de reconnaissance vocale, ou une tâche de segmentation audio ; ou
d) dans lequel l'entrée de réseau représente un texte dans un langage naturel, et la tâche de prédiction comprend une tâche de synthèse vocale ; ou
e) dans lequel l'entrée de réseau représente une séquence d'observations caractérisant des états d'un environnement réel, et la tâche de prédiction comprend une tâche de commande d'agent pour naviguer vers un emplacement cible dans l'environnement, dans lequel l'agent comprend un robot ou un véhicule autonome ; ou
f) dans lequel l'entrée de réseau représente un fragment d'une séquence d'ADN, et la tâche de prédiction comprend une tâche de prédiction de site promoteur.

2. Procédé selon la revendication 1, dans lequel, pour chacune d'une ou plusieurs des incorporations de requêtes :
l'incorporation de requête définit une position spatiale respective dans l'entrée de réseau ; et
la dimension de la sortie de réseau qui correspond à l'incorporation de requête définit une prédiction respective pertinente pour la position spatiale dans l'entrée de réseau.

3. Procédé selon une quelconque revendication précédente, dans lequel pour chacune d'une ou plusieurs des incorporations de requêtes :
l'incorporation de requête comprend une ou plusieurs caractéristiques d'entrée provenant d'une position spatiale respective dans l'entrée de réseau ; et
la dimension de la sortie de réseau qui correspond à l'incorporation de requête définit une prédiction respective pertinente pour la position spatiale dans l'entrée de réseau.

4. Procédé selon une quelconque revendication précédente, dans lequel pour chacune d'une ou plusieurs incorporations de requêtes :
l'incorporation de requête définit une modalité de l'entrée de réseau.

5. Procédé selon une quelconque revendication précédente, dans lequel l'ensemble d'incorporations de requêtes définit collectivement une pluralité de tâches de prédiction, et dans lequel, pour chacune d'une ou plusieurs des incorporations de requêtes :
l'incorporation de requête spécifie une tâche de prédiction respective provenant de la pluralité de tâches de prédiction ; et
la dimension de la sortie de réseau qui correspond à l'incorporation de requête définit une sortie de prédiction pour la tâche de prédiction spécifiée par l'incorporation de requête.

6. Procédé selon la revendication 5, dans lequel la pluralité de tâches de prédiction comprend une ou plusieurs : d'une tâche de classification, d'une tâche de régression, d'une tâche de segmentation, ou d'une tâche d'auto-codage.

7. Procédé selon une quelconque revendication précédente, dans lequel la génération d'une dimension de la sortie de réseau par attention croisée d'une incorporation de requête correspondante sur l'ensemble d'incorporations latentes comprend :
la génération d'un poids d'attention respectif pour chaque incorporation latente sur la base : (i) de l'incorporation de requête, et (ii) de l'incorporation latente ; et
la génération de la dimension de la sortie de réseau correspondant à l'incorporation de requête sur la base des poids d'attention pour les incorporations latentes.

8. Procédé selon la revendication 7, dans lequel la génération de la dimension de la sortie de réseau correspondant à l'incorporation de requête sur la base des poids d'attention pour les incorporations latentes comprend :
le traitement de chaque incorporation latente pour générer une incorporation de valeur de l'incorporation latente ;
la combinaison des incorporations de valeurs à l'aide des poids d'attention ; et
la génération de la dimension de la sortie de réseau correspondant à l'incorporation de requête sur la base au moins en partie d'un résultat de combinaison des incorporations de valeurs à l'aide des poids d'attention ; en particulier dans lequel l'attention croisée est une attention requête-clé-valeur.

9. Procédé selon une quelconque revendication précédente, dans lequel un nombre d'incorporations de requêtes dans l'ensemble d'incorporations de requêtes est supérieur à un nombre d'incorporations latentes dans l'ensemble d'incorporations latentes ; en particulier dans lequel le nombre d'incorporations de requêtes dans l'ensemble d'incorporations de requêtes est supérieur au nombre d'incorporations latentes dans l'ensemble d'incorporations latentes d'un facteur d'au moins 2.

10. Procédé selon une quelconque revendication précédente, dans lequel un nombre d'incorporations latentes dans l'ensemble d'incorporations latentes est prédéfini, et un nombre d'incorporations de requêtes dans l'ensemble d'incorporations de requêtes est variable et indépendant du nombre d'incorporations latentes dans l'ensemble d'incorporations latentes.

11. Procédé selon une quelconque revendication précédente, dans lequel l'entrée de réseau comprend des données multi-modales.

12. Procédé selon une quelconque revendication précédente, dans lequel un nombre d'incorporations latentes dans l'ensemble d'incorporations latentes est inférieur à un nombre d'incorporations d'éléments de données dans l'ensemble d'incorporations d'éléments de données.

13. Procédé selon une quelconque revendication précédente, dans lequel chaque incorporation d'élément de données correspond à une position spatiale respective dans l'entrée de réseau et comprend i) une incorporation de caractéristiques basée sur des caractéristiques de l'entrée de réseau à la position spatiale et/ou ii) une incorporation positionnelle qui caractérise la position spatiale ; et/ou dans lequel chaque incorporation d'élément de données comprend une incorporation de modalité qui définit une modalité correspondant à l'incorporation d'élément de données.

14. Système comprenant :
un ou plusieurs ordinateurs ; et
un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 13.

15. Un ou plusieurs supports de stockage informatique non transitoires stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.
